# EUROPEAN PATENT APPLICATION

(11) **EP 4 015 839 A1**
(43) Date of publication of application: **22.06.2022**
(21) Application number: 20306642.8
(22) Date of filing: 21.12.2020
(51) Int. Cl.: F15B 1/22, B64C 13/50, F15B 21/00, F15B 7/00, F15B 15/18, F16L 47/00

(54) **AUTONOMOUS ACTUATOR AND REFILLING THEREOF**

(71) Applicant: Goodrich Actuation Systems SAS, 95310 Saint Ouen l'Aumône (FR)
(72) Inventor: LESAGE, Emmanuel, 27180 Aulnay sur Iton (FR); SOCHELEAU, Jerôme, 78450 Vernouillet (FR)
(74) Representative: Dehns

(57) **Abstract**

An accumulator assembly for providing hydraulic fluid to an actuator, the assembly comprising: an accumulator (20) for containing a supply of hydraulic fluid, the accumulator having an exit port (21) via which hydraulic fluid can flow, in use, to the actuator (10); the assembly further comprising a coupling (30) comprising a first coupling part (301) configured to be located at an inlet port of the actuator (10) and a second coupling part (302) arranged at the exit port (21) of the accumulator; whereby the first and second coupling parts are configured to matingly engage to form an open passage for flow of the fluid-between the accumulator (20) and the actuator (10), and to close the first coupling part (301) when the first second coupling parts are not engaged, so as to prevent flow from the actuator and to prevent air and pollution ingress the actuator.

## Description

### TECHNICAL FIELD

The disclosure relates to hydraulic actuators and in particular electrohydrostatic actuators (EHA) and refilling such actuators.

### BACKGROUND

Actuators are used in many fields to move or operate other components or surfaces. Various types of mechanical, hydraulic and electrical actuators are known. Electromechanical and electrohydraulic actuators are commonly known in machinery, vehicles, aircraft and other uses. Actuators are often operated using hydraulic fluid to apply pressure to the actuator parts and cause movement of the actuator which, in turn, causes movement of the component or surface to be moved. In more recent times, the benefits of electromechanical and electrohydraulic actuators have been combined in electrohydrostatic actuators (EHA). In an EHA, an electric motor drives a pump connected to the chambers of a hydraulic cylinder. The direction of the flow causes retraction or extension of the actuator piston. The required hydraulic fluid volume is stored in an accumulator between the pump and the actuator cylinder. This accumulator reduces the pressure variation due to fluid dilatation too. Such EHAs are also known as 'Power by Wire' actuators and are fully self-contained actuation systems.

Electrohydraulic actuators need to be connected to a supply of hydraulic fluid and therefore require plumbing to a reservoir of pressurised fluid. On aircraft or in other vehicles or plant, this can be a problem because of the piping/plumbing required and the need for a suitably located reservoir. In aircraft, for example, such actuators have conventionally been connected to the central aircraft hydraulic supply by pipes/tubes. As the accumulator leaks fluid, it can be topped up from the aircraft supply. This can require long lengths of piping extending through the aircraft to the location of the actuators such as on landing gear or wings. As well as the disadvantages of added weight and space requirements of such piping, there is also an increased risk of damage to the pipes or leakage.

For these reasons, the self-contained EHAs have found favour in many applications such as, but not only, on aircraft. For example, with the trend towards More Electric Aircraft (MEA) or, in the future All Electric Aircraft (AEA), the aircraft will not have any, or have a much smaller, hydraulic supply and so autonomous actuators will be necessary.

With EHAs, however, particularly if intended for long term use - e.g. for the entire flight life (approximately 150,000 flight hours) of an aircraft, or in other applications where it is desirable that the actuator can operate over a long time without needing to be refilled or replaced, the accumulator will need to be large enough to contain hydraulic fluid to service the actuator over that time. Such large accumulators add to the overall weight and size of the system.

There is a need for an autonomous EHA assembly with a smaller accumulator but that can still provide the long life required in such applications.

### SUMMARY

In one aspect, there is provided an accumulator assembly for providing hydraulic fluid to an actuator, the assembly comprising: an accumulator for containing a supply of hydraulic fluid, the accumulator having an exit port via which hydraulic fluid can flow, in use, to the actuator; the assembly further comprising a coupling comprising a first coupling part configured to be located at an inlet port of the actuator and a second coupling part arranged at the exit port of the accumulator; whereby the first and second coupling parts are configured to matingly engage to form an open passage for flow of the fluid between the accumulator and the actuator, and to close the first coupling part when the first and second coupling parts are not engaged, so as to prevent flow from the actuator and to prevent air and pollution ingress the actuator.

Optionally, the first and second coupling parts are configured to also close the second coupling part against fluid flow when the first and second coupling parts are not engaged.

The accumulator is any suitable accumulator e.g. a metal bellows type accumulator, or a piston and spring type accumulator.

The coupling may be e.g. a ball or poppet type coupling.

Also provided is an actuator assembly comprising an actuator and an accumulator assembly as described above, the actuator comprising an inlet port and the first coupling part located at the inlet port.

The actuator assembly may be configured to be mounted on an aircraft wing.

Also provided is a method of installing an accumulator assembly as described above, containing hydraulic fluid, onto an actuator mounted to a manifold, the method comprising mating the first and second coupling parts to create a fluid flow passage between the accumulator and the actuator.

The method may include removing an accumulator having depleted reserves of hydraulic fluid by separating the first and second coupling parts, whereby the first coupling part closes against leakage of fluid from the accumulator, and then attaching a replacement accumulator by coupling the first and second coupling parts to recreate a fluid flow passage between the accumulator and the actuator.

The manifold may be attached to an aircraft wing and wherein the accumulator assembly is an inline replaceable unit.

Preferred embodiments will now be described by way of example only, with reference to the drawings. The described examples relate to EHAs for use in aircraft applications such as wing actuators, but the EHA assembly of the disclosure can find application, and be advantageous, in other areas.

### BRIEF DESCRIPTION OF THE DRAWINGS

Figure 1 shows a perspective view of a conventionally mounted EHA for background explanation.
Fig. 2 is a simple schematic view of an EHA assembly in accordance with the disclosure.
Fig. 3 is a schematic view of the coupling of an EHA assembly according to the disclosure.

### DETAILED DESCRIPTION

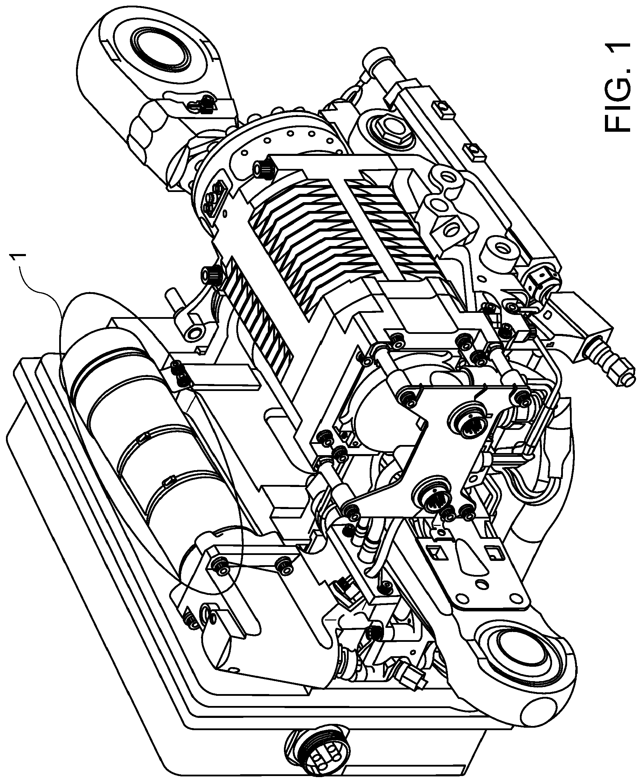

Referring first to Fig. 1, existing EHA technology will be briefly described. The actuator components will not be described as these are known in the art. The accumulator 1 containing pressurised air for the actuator is integrated in the actuator manifold which, in this case, is mounted on an aircraft wing the movement of which is controlled by the actuator. As mentioned above, such autonomous actuators are advantageous e.g. on aircraft where there are no, or only small pressure supplies on the aircraft e.g. for MEA or AEA or where, for other reasons, it is undesirable to have hydraulic lines routed through the aircraft. Such local, autonomous actuators will also be beneficial in many other applications.

The accumulator 1 will be provided in a full, or almost full, state, with sufficient fluid to be operable for the e.g. the life of the actuator or the flight life of the aircraft or any other long life application and is connected locally to the actuator. Because there is no plumbing to the accumulator from a central supply, there is no capability of filling the accumulator in situ (online).

This means, as mentioned above, that the accumulator needs to be relatively large and heavy. In many applications e.g. on thin wings of an aircraft, such EHAs are not desirable.

Also, if the accumulator becomes depleted, the entire assembly needs to be replaced in an offline manner. If the accumulator is removed from the actuator, hydraulic pressure of the actuator will be released.

The assembly of the present disclosure, provides the possibility of refilling the EHA by in-line replacement (ILR) of the accumulator. In this way, a smaller accumulator can be used and when this is depleted it can be replaced with a new accumulator in-line, i.e. without removing the EHA assembly from the aircraft or wherever it is being used. These smaller, lighter, line replaceable assemblies are advantageous anywhere where weight and size is an important consideration e.g. on the wings of thin-wing aircraft.

This is achieved by providing a self-closing (or self-obturating) coupling between the accumulator and the actuator such that the accumulator can be removed from the actuator and when the accumulator is decoupled from the actuator the coupling closes to seal the actuator to avoid release of pressure therefrom.
The maintenance task will ask the operator to monitor temperature variations or a relief valve will be added to avoid overpressure risk due to fluid dilatation.

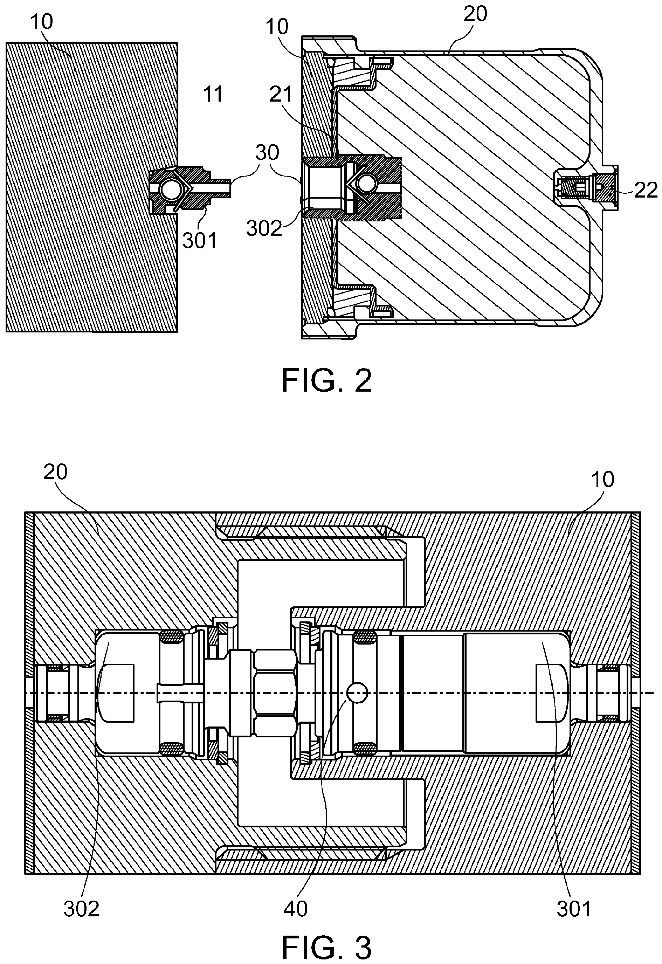

An assembly according to the disclosure will be described further, below, with reference to Figs 2 and 3.

Fig. 2 shows, schematically, the actuator 10 and an accumulator 20 to be attached to the actuator 10 as an autonomous hydraulic fluid supply for the actuator.

The example shown in Fig. 2 has an accumulator fill port by means of which the accumulator 20 can be filled during preparation for use. The fill port 22 is used to pressurize the accumulator with gas when it is not spring energized.

Various types of accumulator may be used e.g. bladder or piston accumulators or metal bellows accumulators.

The accumulator 20 is attached to the actuator 10 such that fluid can flow from an exit port 21 of the accumulator 20 to an inlet port 11 of the actuator 10 via a coupling 30. The coupling is shown in more detail in Fig. 3 and will be explained further below but is a self-closing coupling comprising an actuator part 301 and an accumulator part 302. When coupled together, the two parts 301, 302 cooperate to releasably secure the accumulator to the actuator and to provide a passage through the coupling for hydraulic fluid between the accumulator and the actuator (flow in both directions due to dilatation). The coupling parts are provided with a closing mechanism that is activated when the accumulator part 302 is separated from the actuator part 301 such that the actuator part 301 is sealed to prevent pressure release there through from the actuator 10. The accumulator part 302 may also be configured to close to prevent release of pressure from the accumulator when the coupling parts are separated.

Thus, when a condition arises whereby the accumulator 20 can no longer provide fluid to the actuator e.g. because its level of fluid has become depleted or because the accumulator is damaged etc., the accumulator 20 can be removed, thus separating the coupling parts 301,302 and thus closing the flow path from the actuator and, possibly, also from the accumulator. A replacement accumulator, having a matching coupling part 302 can then be fitted to the actuator via its coupling part 301. Connecting the two coupling parts 301,302 causes the closing mechanism to open again to therefore open the flow passage between the accumulator and the actuator. The accumulator can therefore be replaced in-line without any leakage and/or contamination of the actuator.

Fig. 3 shows an example of a coupling 30 with the accumulator part 302 and the actuator part 301 coupled to define a flow passage 40 between the accumulator 20 and the actuator 10.

Different types of self-closing coupling may be used to achieve the objectives of the disclosure. One part of the coupling e.g. the actuator part 301 may have a closure such as diaphragm or displaceable member that, in the closed state, forms a seal across the flow passage and the other coupling part comprises a displacement member such as a hollow pin or rod that extends to push the closure out of the flow passage when the coupling parts are mated together. When the coupling parts are separated, the displacement member is removed from the flow passage and the seal returns to its closed position.

The self-closing coupling allows an EHA assembly to be provided which uses a smaller accumulator which can be replaced in-line, without leakage or contamination of the actuator. The assembly could also be used in actuator assemblies that require refilling as well as replacement.

## Claims

1. An accumulator assembly for providing hydraulic fluid to an actuator, the assembly comprising:
an accumulator (20) for containing a supply of hydraulic fluid, the accumulator having an exit port (21) via which hydraulic fluid can flow, in use, to the actuator (10);
the assembly further comprising a coupling (30) comprising a first coupling part (301) configured to be located at an inlet port of the actuator (10) and a second coupling part (302) arranged at the exit port (21) of the accumulator;
whereby the first and second coupling parts are configured to matingly engage to form an open passage for flow of the fluid between the accumulator (20) and the actuator (10), and to close the first coupling part (301) when the first and second coupling parts are not engaged, so as to prevent flow from the actuator and to prevent air and pollution ingress the actuator.

2. The assembly of claim 1, wherein the first and second coupling parts are configured to also close the second coupling part (302) against fluid flow when the first and second coupling parts are not engaged.

3. The assembly of any preceding claim, whereby the accumulator is a metal bellows type accumulator.

4. The assembly of claim 1 or 2, whereby the accumulator is a piston and spring type accumulator.

5. The assembly of any preceding claim, whereby the coupling is a ball or poppet type coupling.

6. An actuator assembly comprising an actuator (10) and an accumulator assembly as claimed in any preceding claim, the actuator comprising an inlet port (11) and the first coupling part (301) located at the inlet port.

7. The actuator assembly being configured to be mounted on an aircraft wing.

8. A method of installing an accumulator assembly as claimed in any of claims 1 to 5, containing hydraulic fluid, onto an actuator mounted to a manifold, the method comprising mating the first and second coupling parts to create a fluid flow passage between the accumulator and the actuator.

9. The method of claim 8, further comprising removing an accumulator having depleted reserves of hydraulic fluid by separating the first and second coupling parts, whereby the first coupling part closes against leakage of fluid from the accumulator, and then attaching a replacement accumulator by coupling the first and second coupling parts to recreate a fluid flow passage between the accumulator and the actuator.

10. The method of claim 8 or 9, whereby the manifold is attached to an aircraft wing and wherein the accumulator assembly is an inline replaceable unit.
